## Europäisches Patentamt
## European Patent Office
## Office européen des brevets

(11) Veröffentlichungsnummer: **0 036 640**
A1

(12) ## EUROPÄISCHE PATENTANMELDUNG

(21) Anmeldenummer: **81102101.3**

(22) Anmeldetag: **20.03.81**

(51) Int. Cl.³: **C 25 C 7/00**, C 02 F 1/46

(30) Priorität: **24.03.80 CH 2281/80**

(43) Veröffentlichungstag der Anmeldung: **30.09.81**
**Patentblatt 81/39**

(84) Benannte Vertragsstaaten: **AT BE CH DE FR GB IT LI LU NL SE**

(71) Anmelder: **Photochemie AG, CH-6311 Nauägeri (CH)**

(72) Erfinder: **Brunschweller, Alfons, Alte Landstrasse 112, CH-6314 Unterägeri (CH)**
Erfinder: **Maurer, Hartmut, Albisstrasse, CH-6312 Steinhausen (CH)**

(74) Vertreter: **Maspoli, Renato A., EGLI PATENTANWÄLTE Horneggstrasse 4, CH-8008 Zürich (CH)**

(54) **Metall-Rückgewinnungszelle zur Reinigung von industriellen Prozesslösungen und Abwässern.**

(57) Die neue Metall-Rückgewinnungszelle erlaubt es, ionenhaltige Abwässer in bestehenden Anlagen zu reinigen. Die Vorrichtung kann den gegebenen örtlichen und physikalisch-chemischen Umständen ausserordentlich gut angepasst werden.

Die Vorrichtung enthält im allgemeinen einen offenen Rahmen (1), plattenförmige Elektroden (4, 5) sowie eine Gaszuführleitung (3).

0036640

Metall-Rückgewinnungszelle zur Reinigung von industriellen Prozesslösungen und Abwässern.

Die Erfindung betrifft eine Metall-Rückgewinnungszelle, die die Reinigung von industriellen Prozesslösungen und Abwässern, insbesondere jene der galvanischen Betriebe, ermöglicht.

Ein grosser Teil der in der Industrie anfallenden gebrauchten Prozesslösungen oder Abwässer enthalten Anionen oder Kationen, welche aufgrund von Umweltverschmutzungsgefahren und/oder ökonomischen Ueberlegungen daraus entfernt werden müssen. Die Elektrolyse ermöglicht solche Vorgänge. Da es jedoch bis heute noch keine spezielle elektrolytische Metall-Rückgewinnungszellen für die Reinigung von Abwässern in Behältern gibt, wird die elektrolytische Methode nur selten angewandt. Zudem sind wegen allgemeinen Platzmangels in der Industrie grosse zusätzliche Apparaturen nicht erwünscht.

Der Erfindung liegt daher die Aufgabe zugrunde, eine Metall-Rückgewinnungszelle zu schaffen, die dank ihrer kompakten Bauweise direkt in den bereits vorhandenen Prozesslösungs- bzw. Abwässerbehältern das Wasser reinigt, ohne den Prozess zu stören.

0036640

In "Topics in Pure and Applied Electrochemistry" (1975), beschreiben A.T. Kuhn und R.W. Houghton unter "The Design and Optimisation of Industrial Electrochemical Cells" Neuentwicklungen von elektrolytischen Zellen für verschiedene Anwendungszwecke. Keine der beschriebenen Anordnungen entsprechen jedoch der erfindungsgemässen Vorrichtung. Nicht einmal nahegelegt wird die Erfindung aus dem genannten Fachartikel.

In Galvanotechnik 71 (1980) Nr. 3 wird auf den Seiten 319 und 320 ein Edelmetall-Rückgewinnungssystem angepriesen, das Edelmetalle aus Spülbecken abscheidet. Das System arbeitet mit einer eigenen Pumpe und einem speziellen, austauschbaren Sammelbehälter, in dem das Edelmetall niedergeschlagen wird. Der "Gold Bug" enthält keine plattenförmige Elektroden und der Abstand Anode-Kathode beträgt mindestens einige Zentimeter. Die praktisch erreichbaren minimalen Metallkonzentrationen liegen bei mindestens 20 ppm.

In der gleichen Zeitschrift wird auf der Seite 257 eine elektrolytisch funktionierende, anscheinend nur für die Silberrückgewinnung aus Fixierbädern geeignete Vorrichtung erwähnt, ohne dass deren Aufbau auch nur angedeutet wird.

Die erfindungsgemässe Metall-Rückgewinnungszelle zur Reinigung von industriellen Prozesslösungen und Abwässern ist im Patentanspruch 1 gekennzeichnet.

Die Hauptkomponenten der erfindungsgemässen Zelle sind also die Elektroden, der Rahmen und die gelochte Gaszufuhrleitung.

Eine erste Ausführungsform kann aus zwei nebeneinander liegenden Elektroden (eine Arbeitselektrode und eine Gegenelektrode), oder drei Elektroden, bei welchen die Gegenelektrode beidseitig parallel liegende Arbeitselektroden aufweist, bestehen. Die Elektroden werden entsprechend polarisiert, so dass auf die Arbeitselektrode die gewünschte Reaktion, z.B. eine Metallabscheidung stattfindet.

Durch den bereit erwähnten Rahmen werden die Elektroden in einer stabilen Anordnung in einem gegebenen Abstand zueinander und an geeignetem Platz im Behälter gehalten. Die Zelle muss im Behälter integriert werden, damit der Ein- bzw. Auslauf für Wasser zum Elektrolyseraum zwischen den Arbeits- bzw. Gegenelektroden frei gehalten wird. Dadurch wird eine gute Zirkulation zwischen Badevolumen und Elektrolyseraum gewährleistet.

Die aufsteigenden Gasblasen bewirken eine hohe Stofftransportgeschwindigkeit zur Arbeitselektrode, wodurch ein schneller Reinigungsprozess und ein hoher Abscheidungsgrad erreicht wird. Der Abstand zwischen der Arbeits- bzw. Gegenelektrode muss einerseits gross genug sein, um Platz für z.B. abgeschiedene Metalle freizuhalten, andererseits nicht zu gross, damit die Stofftransporterhöhung nicht beeinträchtigt wird, oder die erwünschte kompakte Bauweise des Geräts nicht mehr erreicht wird. Der optimale Elektrodenabstand liegt daher zwischen 0,5 bis 20 mm. Die Perforierungen des gelochten Rohrs zur Gaseinleitung müssen klein sein, damit feine Gasblasen, die den besten Rühreffekt zeigen, gebildet werden. Optimaler Durchmesser ist 0,1 bis 1 mm, in einem Abstand von 0,5 bis 20 mm. Die Perfo-

0036640

rierungen werden in geeignetem Winkel ins Rohr gebohrt,
damit die Gasblasen direkt in den Elektrolyseraum gestossen werden.

Als besonders geeignete Ausführungsform hat sich eine
erfindungsgemässe Metall-Rückgewinnungszelle erwiesen,
die innen eine Kathode bzw. Arbeitselektrode und aussen
zwei Anoden bzw. Gegenelektroden aufweist, wobei der
Abstand zu den Elektroden unten, d.h. beim Eintritt der
Lösung 20 mm und oben, d.h. beim Austritt 2 bis 5 mm
beträgt. Dadurch wird sowohl die Metallabscheidung
optimiert wie auch die Restkonzentration minimalisiert;
der zuletzt genannte.Effekt ist vermutlich auf die
oben an der Zelle stattfindende Erhöhung der Stofftransportparameter (Erhöhung der Gasgeschwindigkeit)
zurückzuführen. Mit einer solchen bevorzugten Ausführungsform der erfindungsgemässen Metall-Rückgewinnungszelle werden Restkonzentrationen von bis zu 5 ppm
Schwermetallionen erreicht,

Die Gesamtkonstruktion der Zelle muss chemisch korrosionsbeständig sein. Für den Rahmen wird typischerweise
Plastikmaterial wie PVC, PP oder PE verwendet. Die
Elektroden müssen zusätzlich der elektrischen Polarisation widerstehen und elektrisch leitend sein. Die
Elektroden sollen am besten edler als das abzuscheidende Metall sein. Dabei kommen rostfreier Stahl oder
Kupfer als Kathoden und eine korrosionsbeständige,
mit einer die Passivierung inhibierenden Schutzschicht
versehenes Metall als Anoden in Frage.

- 5 -                      0036640

Die Erfindung wird nun gemäss beiliegenden Figuren von speziellen Ausführungsformen und anhand von Detailbeschreibungen näher erläutert.

Die Hauptkomponenten der hier betrachteten Zelle sind die Elektroden: eine Gegenelektrode, zwei Arbeitselektroden und der Rahmen, der aus zwei auf eine Platte befestigten Streifen besteht. Zwischen zwei solchen Rahmen, wovon jeder eine Arbeitselektrode trägt, wird die Gegenelektrode montiert.

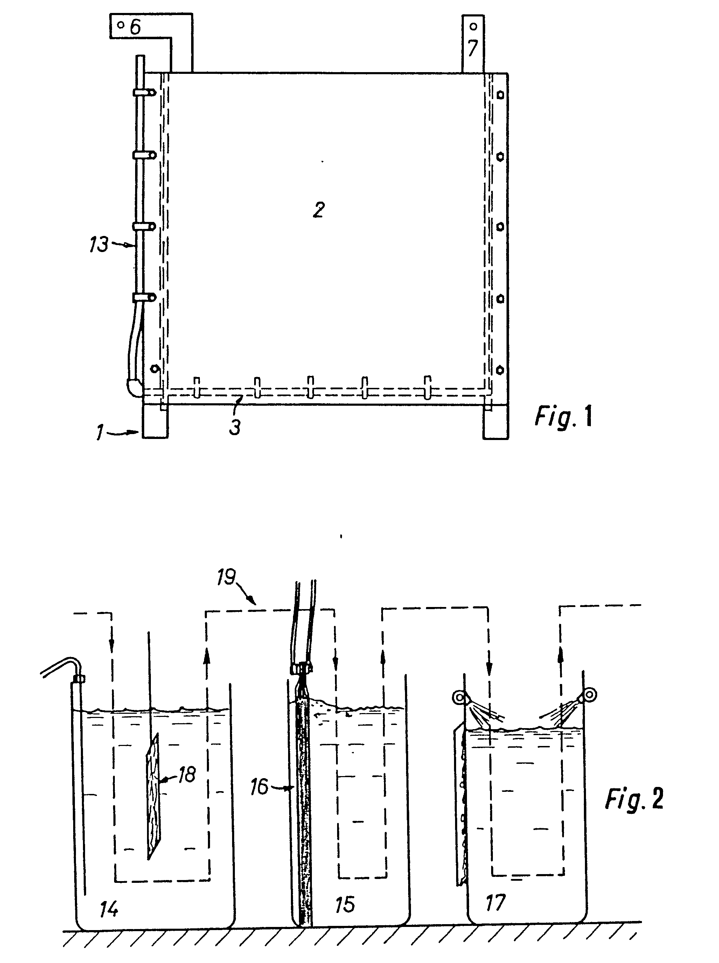

Figur 1 ist ein Vorderanblick einer Zelle. Sichtbar sind die Rahmen- bzw. Separatorenstreifen 1, welche gleichzeitig als Füsse dienen, um eine günstige Zellenhöhe im Bad zu bieten. Die Streifen sind an der Aussenplatte 2 befestigt. Das gelochte Rohr 3 - zwecks Gaseinleitung - wird am Rahmen direkt unter dem Elektrolyseraum angebracht. Ebenfalls gezeichnet sind die Stromzuführungen zu Arbeits- 5 bzw. Gegenelektrode 4, sowie die Gasrohrleitung 13.

In beide Elektrolysekammern (Raum zwischen den Elektroden) muss Gas eingeleitet werden. Dies wird mit Hilfe einer bzw. zwei Gaseinleitungsröhren gemacht. Im ersten Fall benötigt man zwei Löcherreihen im Rohr, damit die Gaszufuhr in beide Elektrolysekammern gewährleistet ist.

Figur 2 zeigt eine der möglichen Arbeitsweisen der Zelle. In diesem Beispiel ist die beschriebene Erfindung in ein Standspülbad 15 eines galvanischen Betriebes gestellt. Das Werkstück 18 wird unmittelbar nach der galvanischen Behandlung (im Bad 14) im Standspülbad 15 gewaschen. Durch Anwendung der Erfindung wird das abgeschleppte Metall von Bad 14 sozusagen vollständig entfernt durch Abscheidung an die Arbeitselektrode 5, so dass das Metall nicht in die folgenden Spülbecken kommt.

Beispiele

Die folgenden Beispiele stellen einige Ausführungsformen der Erfindung dar.

1) Eine Zelle wird mit folgenden Elektroden: 2 Arbeitselektroden 45 x 50 x 0,15 cm$^3$ (rostfreier Stahl) und 1 Gegenelektrode 45 x 50 x 0,15 cm$^3$ (V4A Stahl) zusammengestellt. Mit PVC Rahmen werden die Elektroden im Abstand von 6 mm gehalten. Die symmetrische Anordnung mit einer Gegenelektrode und zwei Arbeitselektroden wurde hier verwendet. Ein einziges Gaseinleitungsrohr mit einem Aussendurchmesser von 6 mm, perforiert mit 0,3 mm Durchmesser-Löchern im Abstand von 1 cm in zwei Reihen mit einem Winkel von 90° zueinander, bringt das Gas hinein, welches der Umrührung des Wassers dient. Die Zelle war in einem Tank mit synthetischem Spülwasser folgender Zusammensetzung gestellt:

    30 g Kupfer (II)-sulphat Pentahydrat
  200 g Kalium-Natriumtartrat
  100 g Natriumhydroxid
    65 g Soda
    52 l Wasser

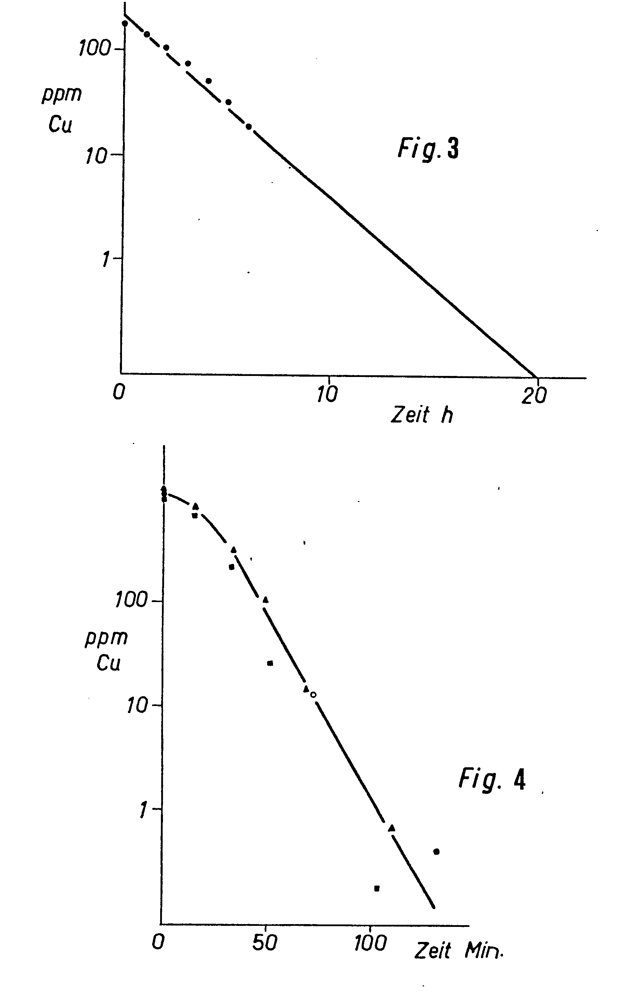

Pressluft und elektrischer Strom werden der Zelle zugeführt. Bei einem Zellenstrom von 15A und einem Zellenpotential von 1,6 V mit kathodisch polarisierter Arbeitselektrode wurde die Kupferkonzentration, die in Fig. 3 gezeigt ist, gemessen.

2) Eine ähnliche Zelle wie im Beispiel 1 beschrieben, jedoch mit rostfreien Kathoden und einer DSA Anode folgender Abmessung: $14 \times 104 \times 0,3 \text{ cm}^3$ wurde in einen Tank mit synthetischem Spülwasser folgender Zusammensetzung gestellt:

    25 g Kupfer (II)-sulphat Pentahydrat
    10 g Schwefelsäure
     7 1 Wasser

Wieder wurde Pressluft, jedoch bei einem Zellenstrom von 10 A (Spannung 1,6 V). zugeführt. Figur 4 zeigt den zeitlichen Verlauf der Kupferkonzentration.

3. Eine Zelle wie im Beispiel 2 beschrieben, jedoch mit folgenden Elektrodenabmessungen: $60 \times 65 \times 0,2 \text{ cm}^3$ wurde in ein 100 1 Standspülbad einer sauren, galvanischen Kupferabscheidungsstrasse gestellt. Pressluft und elektrischer Strom (20 A, 1,6 V) werden der Zelle zugeführt. Bei kontinuierlichem Betrieb mit einer Abschleppungsgeschwindigkeit von 2 1 20g/1 Kupferbad pro Tag, wurde eine mittlere Kupferkonzentration von 0,05 g/1 im Standspülbad nicht überschritten, was einer Entfernung von 99,75 % des abgeschleppten Kupfers entspricht.

0036640

## Patentansprüche

1. Metall-Rückgewinnungszelle zur Reinigung von industriellen Prozesslösungen und Abwässern, gekennzeichnet durch
   - mindestens einen offenen Rahmen, der sowohl zur elektrisch isolierenden Halterung der Elektroden als auch zum Abstellen bzw. Einhängen der Vorrichtung in den Behältern dient,
   - plattenförmige Elektroden,
   - mindestens eine Gaszuleitung mit Austrittsöffnungen sowie
   - die notwendigen Strom- und Gaszuführungen,
   wobei die Prozesslösungen und Abwässer frei zwischen den Elektroplatten zirkulieren können.

2. Metall-Rückgewinnungszelle gemäss Patentanspruch 1, dadurch gekennzeichnet, dass die Gaszuleitung die Oeffnungen zuunterst zwischen den Elektroden in der Vorrichtung hat, wobei die aufsteigenden Gasblasen die Prozesslösungen und Abwässer zwischen den Elektroden durchkonvehieren.

3. Metall-Rückgewinnungszelle gemäss Patentanspruch 1, dadurch gekennzeichnet, dass sie eine in der Mitte angeordnete Anode aus korrosionsfestem, stabilem, elektrisch gut leitendem Material, zwei aussen angeordnete Kathoden aus Metall, das edler ist als die abzuscheidenden Metalle, sowie aus einem Luftzuleitungsrohr, das unter der Anode verläuft und die austretende Luft gleichmässig in beide Elektrolyseräume zwischen den drei Elektroden verteilt, enthält, wobei die obigen Bestandteile mittels eines offenen
Rahmens aus Hart-PVC zusammengehalten werden.

4. Metall-Rückgewinnungszelle gemäss Patentanspruch 3,
   dadurch gekennzeichnet, dass
   - das Anodenmaterial ein aktiviertes, korrosionsbeständiges Metall ist, wobei das Metall eine die
     Passivierung inhibierende Schutzbeschichtung
     trägt,
   - die Kathoden im wesentlichen aus Kupfer oder aus
     rostfreiem Stahl bestehen,
   - der Abstand zwischen Anoden und Kathoden zwischen
     0,5 und 20 mm liegt und
   - die gerichteten Perforierungen in der Luftzulei-
     tung 0,1 bis 1 mm grosse Durchmesser haben.

1/2                                    0036640

Fig. 1

Fig. 2

2/2

0036640

Fig. 3

ppm
Cu

Zeit h

Fig. 4

ppm
Cu

Zeit Min.

| Kategorie | **EINSCHLÄGIGE DOKUMENTE** | | KLASSIFIKATION DER ANMELDUNG (Int. Cl.³) |
|---|---|---|---|
| | Kennzeichnung des Dokuments mit Angabe, soweit erforderlich, der maßgeblichen Teile | betrifft Anspruch | |
| | DE - A - 2 057 606 (LANCY LABORATORIES) <br><br> + Seiten 1-3; Seite 4, Absätze 1,2; Seite 6, letzter Absatz; Seite 7, Absatz 1 + <br><br> -- <br><br> DE - A - 1 925 099 (CAZABAT) <br><br> + Seite 1; Seite 2, Absätze 1,2 + <br><br> ---- | 1 <br><br><br><br><br><br><br> 1 | C 25 C 7/00 <br> C 02 F 1/46 |

**RECHERCHIERTE SACHGEBIETE (Int. Cl.³)**

C 25 C

C 02 F 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-06-1981 | ONDER |

EPA form 1503.1   06.78